# EUROPEAN PATENT SPECIFICATION

(11) **EP 0 891 857 B1**
(45) Date of publication and mention of the grant of the patent: **23.10.2002**
(21) Application number: 98305735.7
(22) Date of filing: 17.07.1998
(51) Int. Cl.: B29C 63/34, F16L 55/165, B26D 7/01

(54) **Device for confirming the position of branch pipe opening and pipe lining method using the device**
Vorrichtung zum Orten des Eintritts einer Abzweigrohrleitung und Rohrauskleidungsverfahren unter Verwendung dieser Vorrichtung
Dispositif pour repérer la position de l'entrée d'une conduite de dérivation et méthode de revêtement de conduites utilisant ce dispositif

(30) Priority: 18.07.1997 JP 19364497
(43) Date of publication of application: 20.01.1999
(73) Proprietor: SHONAN GOSEI - JUSHI SEISAKUSHO K.K., Hiratsuka-shi, Kanagawa-ken (JP); YOKOSHIMA & COMPANY, Yuki-gun, Ibaraki-ken (JP); Get Inc., Tsukuba-shi, Ibaraki-ken (JP)
(72) Inventor: Kamiyama, Takao, Hiratsuka-shi, Kanagawa-ken (JP); Yokoshima, Yasuhiro, Yuki-gun, Ibaraki-ken (JP); Endoh, Shigeru, Niihari-gun, Ibaraki-ken (JP)
(74) Representative: Whalley, Kevin

(56) References cited:
- EP-A- 0 020 213
- EP-A- 0 407 575
- EP-A- 0 468 058
- EP-A- 0 640 727
- DE-A- 4 024 926
- GB-A- 1 026 000
- US-A- 4 893 841

## Description

The present invention relates to a device for confirming the position of a branch pipe opening for facilitating a cutting operation for cutting a pipe liner bag applied for lining of a main pipe, and a pipe lining method using this device.

When an underground pipe, such as a pipeline or passageway, becomes defective or too old to perform properly, the pipe is repaired and restored without digging the earth to expose the pipe and disassembling the sections of the pipe. This non-digging method of repairing an underground pipe has been known and practiced commonly in the field of civil engineering. The pipe lining method utilizes a tubular pipe liner bag made of a resin absorbent material impregnated with a hardenable resin, and having the outer surface covered with a highly air-tight plastic film. The tubular pipe liner bag is inserted into a pipe to be repaired by means of a pressurized fluid such that the pipe liner bag is turned inside out as it proceeds deeper in the pipe. Hereinafter, this manner of insertion shall be called "exerting". When the entire length of the tubular liner bag is everted (i.e., turned inside out) into the pipe, the everted tubular liner bag is urgedagainst the inner wall of the pipe by a pressurized fluid, and the tubular flexible liner is hardened as the hardenable resin impregnated in the liner is heated, which is effected by heating the fluid filling the tubular liner bag. It is thus possible to line the inner wall of the defective or old pipe with a rigid liner without digging the ground and disassembling the pipe sections.

Generally, a main pipe of sewerage pipe lines or the like may have a plurality of branch pipes confluent thereto, which can also be lined by a method similar to that mentioned above. More specifically, for the lining of a branch pipe, there has been used an appropriate branch pipe liner bag comprising a hardened flange at one end thereof, a tubular resin absorbent material having the outer surface thereof coated with a highly air-tight plastic film, and an unhardened hardenable resin impregnated in the tubular resin absorbent material. This branch pipe liner bag is introduced into a main pipe, and the flange of the branch pipe liner bag is closely contacted to the periphery of a branch pipe opening of the main pipe. In this state, the branch pipe liner bag is everted into the branch pipe from the main pipe side toward the ground by a fluid pressure. Then, the hardenable resin impregnated in the tubular resin absorbent material is hardened with the branch pipe liner bag remaining urged against the inner wall of the branch pipe, thus achieving the lining for the branch pipe.

Generally, when a main pipe having a branch pipe is to be lined with a main pipe liner bag, the main pipe liner bag must be cut at a location of an opening to the branch pipe since the main pipe liner bag covers the opening.

In this event, since a human cannot enter a main pipe having a diameter of approximately 800 m/m or less, a cutting robot is introduced into the main pipe and driven to operate a cutter provided thereon, through remote control, to cut a portion of a main pipe liner bag covering a branch pipe opening while monitoring a TV camera, also introduced in the main pipe, on the ground.

However, it is not easy to find a branch pipe opening by means of the TV camera after a main pipe has been lined, so that a hardening pressure (a pressure for pressing a main pipe liner bag onto the inner wall of a main pipe) is set at a value higher than a normal value, during a lining operation, to draw the main pipe liner bag to the branch pipe opening so as to monitor the main pipe liner bag for a recessed portion formed thereon through a TV camera, thus finding the position of the branch pipe opening.

However, when the hardening pressure is increased as mentioned above, a liquid hardenable resin impregnated in the main pipe liner bag may be extruded therefrom, move within an associated branch pipe, and harden in the branch pipe.

Particularly, when a sewage pipe line is concerned, branch pipe openings often have shapes other than a true circle or have diameters different from those of the branch pipes themselves. Thus, a recess formed on the pipe liner bag may appear in a form conformal to the non-circular branch pipe opening, so that an exact position to cut cannot be precisely identified, thereby resulting in cutting a deviated position.

As solutions to the first problem, it may be possible to apply a method of providing an impermeable barrier liner between a main pipe liner bag and a main pipe for preventing a liquid hardenable resin from oozing; a method of additionally mixing a filler, for example oxide of magnesium (MgO), talc, or the like, when the liquid hardenable resin is an unsaturated polyester resin, to increase the viscosity of the liquid hardenable resin to prevent the same from moving; and so on. However, none of these methods can completely prevent the liquid hardenable resin from leaking or moving.

As to the second problem, no effective countermeasures exist at present.

Attention is also drawn to EP-A-0468058 which discloses a device in the form of water-impermeable water stop material (10,70) having an expandable hose portion (18,72) and a flange portion (20,74) integrally connected to one end of the hose portion. The water stop material is disposed in first and second pipelines in such a manner that the flange portion is positioned in the first pipeline (12) and the hose portion is positioned in the second pipeline (14), and is maintained, for example, by means of a base (24,54,82) radially and flaringly wound therearound, in such a manner that the flange portion is in a liquid-tight contact with the inner surface of the first pipeline and the hose portion extends across the second pipeline. That is, EP-A-0468058 discloses a device 10 for confirming the position of a branch pipe opening comprising a flange 20; and also a device 10 for confirming the position of a branch pipe opening comprising a holding member 10.

Attention is further drawn to the disclosures of US-A-4893841 and EP-A-0407575.

The present invention has been made in view of the problems mentioned above, and it is an object of the invention to provide a device for confirming the position of a branch pipe opening on a main pipe liner bag which allows a branch pipe opening to be easily found to exactly cut the branch pipe liner bag along the branch pipe opening, without causing a liquid hardenable resin impregnated in the main pipe liner bag from leaking.

It is another object of the present invention to provide a pipe lining method using the above-mentioned device.

According to one aspect of the present invention, there is provided a device for confirming the position of a branch pipe opening, comprising: a holder member having a shape such that the holder member is in close contact with an inner wall of a main pipe when the device is placed in position; and a protrusion formed in a portion of the holder member, wherein the protrusion has an opening substantially conformal to a branch pipe opening, and extends beyond an inner surface or beyond the inner surface and an outer surface of the holder member.

The holder member may be made of a plastic material, wood, or metal having elasticity, and the holder member may have an outer diameter which is set larger than an inner diameter of the main pipe when the device is introduced into the main pipe. Also, the circumferential length of the holder member may be set longer than one half of the circumference of an inner wall of the main pipe. Alternatively, the circumferential length of the holder member may be set shorter than one half of the circumference of an inner wall of the main pipe, and an outer surface of the holder member may be applied or impregnated with a bonding agent.

According to another aspect of the present invention, there is provided a device for confirming the position of a branch pipe opening comprising a flange shaped for abutment to an inner wall of a main pipe around the periphery of a branch pipe opening, and a protrusion formed in a portion of the flange, wherein the protrusion has an opening substantially conformal to the branch pipe opening, and extends beyond an inner wall or beyond the inner wall and an outer wall of the flange.

According to a further aspect of the present invention, there is provided a pipe lining method for lining an inner wall of a main pipe having a branch pipe confluent thereto; comprising the steps of:
introducing a device for confirming the position of a branch pipe opening into a main pipe, wherein the device for confirming the position of a branch pipe opening comprises a holder member having a shape such that the holder member is in close contact with an inner wall of a main pipe when the device is placed in position, and a protrusion formed in a portion of the holder member, the protrusion having an opening substantially conformal to a branch pipe opening, the protrusion extending beyond an inner surface or beyond the inner surface and an outer surface of the holder member;
positioning the protrusion of the device at a branch pipe opening;
closely contacting the holder member onto an inner wall of the main pipe to insert the protrusion into the branch pipe opening so that the device is secured within the main pipe;
lining the main pipe using a main pipe liner bag, the main pipe liner bag comprising a tubular resin absorbent material and an unhardened liquid hardenable resin impregnated in the tubular resin absorbent material; and
cutting the main pipe liner bag along a mark substantially conformal to the branch pipe opening, the mark being protrusively formed on the main pipe liner bag due to the protrusion of the device for confirming the position of a branch pipe opening.

The device for confirming the position of a branch pipe opening may be set on an in-pipe working robot in a diameter compressed state, and released from the diameter compressed state after the protrusion of the device is positioned at the branch pipe opening by the in-pipe working robot introduced in the main pipe, so that the device is secured at a predetermined position in the main pipe. The main pipe liner bag may be cut by a cutter arranged on the in-pipe working robot. The positioning of the device for confirming the position of a branch pipe opening and the cutting of the main pipe liner bag may be performed while the inside of the main pipe is being monitored on the ground through a TV camera introduced into the main pipe.

According to a further aspect of the present invention, there is provided a pipe lining method for lining an inner wall of a main pipe having a branch pipe confluent thereto, comprising the steps of:
introducing a device for confirming the position of a branch pipe opening into a main pipe, wherein the device for confirming the position of a branch pipe opening comprises a flange shaped for abutment to an inner wall of a main pipe around the periphery of a branch pipe opening, and a protrusion formed in a portion of the flange, the protrusion having an opening substantially conformal to the branch pipe opening, the protrusion extending beyond an inner wall or beyond the inner wall and an outer wall of the flange;
positioning the protrusion of the device at the branch pipe opening;
placing the flange of the device in abutting relationship to the inner wall of the main pipe around the periphery of the branch pipe opening;
securing the device on the inner wall of the main pipe by anchor bolts inserted through the flange;
lining the main pipe using a main pipe liner bag, the main pipe liner bag comprising a tubular resin absorbent material and an unhardened liquid hardenable resin impregnated in the tubular resin absorbent material; and
cutting the main pipe liner bag along a mark substantially conformal to the branch pipe opening, the mark being protrusively formed on the main pipe liner bag due to the protrusion of the device for confirming the position of a branch pipe opening.

As will be appreciated from the foregoing, according to the pipe lining method using the first device for confirming the position of a branch pipe opening, when the device for confirming the position of a branch pipe opening is set within a main pipe, the protrusion of the device is inserted into a branch pipe opening for positioning, and the main pipe is lined using a main pipe liner bag, the protrusion of the device for confirming the position of a branch pipe opening causes a mark substantially conformal to the branch pipe opening to be protrusively formed on the main pipe liner bag, so that the main pipe liner bag can be exactly cut along the mark. since a hardening pressure need not be increased as before, it is possible to eliminate inconveniences such as oozing and hardening of a liquid hardenable resin impregnated in the main pipe liner bag. In addition, even if a branch pipe opening has a non-circular shape or a diameter different from that of the branch pipe itself, the main pipe liner bag can be exactly cut along a mark substantially conformal to the branch pipe opening, protrusively formed on the main pipe liner bag by the device for confirming the position of a branch pipe opening of the present invention.

Also, in the pipe lining method using the second device for confirming the position of a branch pipe opening, when a main pipe is lined using a main pipe liner bag after the device for confirming the position of a branch pipe opening is secured on the inner wall of a main pipe, a mark substantially conformal to the branch pipe opening is protrusively formed on the main pipe liner bag by the protrusion of the device for confirming the position of a branch pipe opening, so that the main pipe liner bag can be exactly cut along the mark.

The invention will be further described with reference to the accompanying drawings, wherein:
Fig. 1 is a cross-sectional view taken along a section line A-A in Fig. 2 illustrating a device for confirming the position of a branch pipe opening according to a first embodiment of the present invention;
Fig. 2 is a lateral view of the device for confirming the position of a branch pipe opening according to the first embodiment;
Figs. 3 to 5 are cross-sectional views each illustrating a device for confirming the position of a branch pipe opening according to another embodiment;
Figs. 6 and 7 are cross-sectional view illustrating steps of a pipe lining method according to the present invention using the device for confirming the position of a branch pipe opening of the first embodiment;
Fig. 8 is a cross-sectional view taken along a line B-B in Fig. 7;
Figs. 9 and 10 are cross-sectional views illustrating steps of the pipe lining method according to the present invention using the device for confirming the position of a branch pipe opening of the first embodiment;
Fig. 11 is a cross-sectional view taken along a line C-C in Fig. 10;
Figs. 12 and 13 are cross-sectional views illustrating steps of the pipe lining method according to the present invention using the device for confirming the position of a branch pipe opening of the first embodiment;
Fig. 14 is a cross-sectional view illustrating a device for confirming the position of a branch pipe opening according to a second embodiment of the present invention;
Fig. 15 is a perspective view of the device for confirming the position of a branch pipe opening according to the second embodiment of the present invention; and
Figs. 16 and 17 are lateral cross-sectional views illustrating steps of a pipe lining method according to the present invention using the device for confirming the position of a branch pipe opening of the second embodiment.

The present invention will hereinafter be described in connection with preferred embodiments thereof with reference to the accompanying drawings.

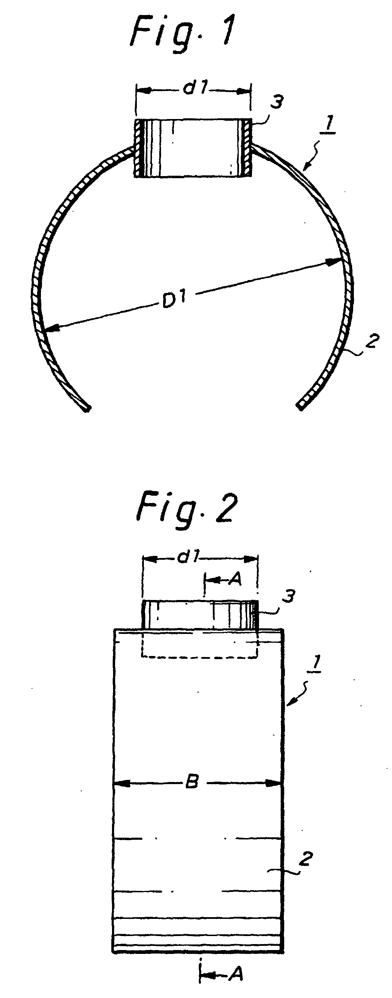

A first embodiment of the present invention will now be described with reference to Figs. 1 and 2. Fig. 1 is a cross-sectional view of a device for confirming the position of a branch pipe opening according to the first embodiment (taken along a line A-A in Fig. 2), and Fig. 2 is a lateral view of the device.

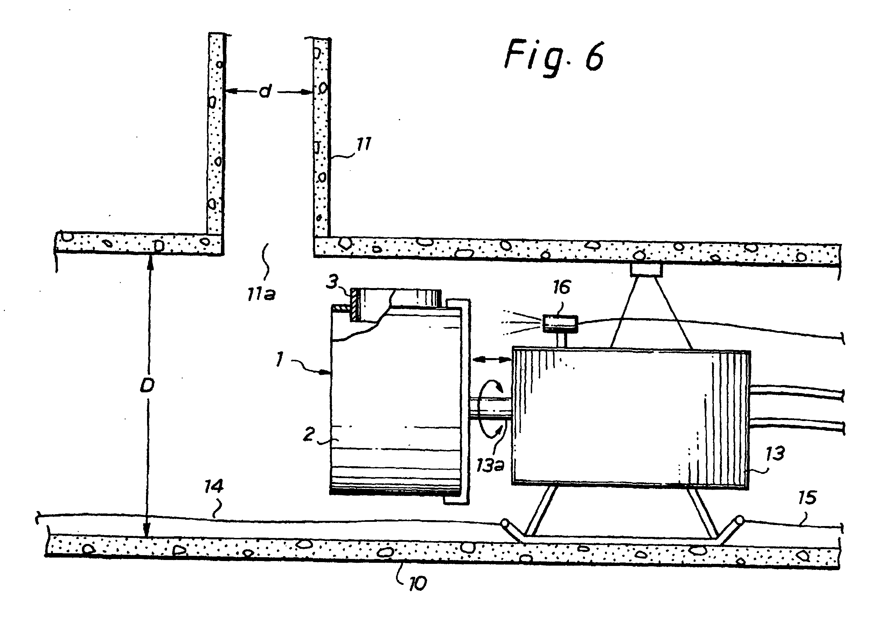

The device for confirming the position of a branch pipe opening (hereinafter simply referred to as the "device") 1 according to the first embodiment comprises a holder member 2 having an arcuate shape conformal to the inner wall of a main pipe 10 (see Fig. 6); and a protrusion or a cylinder portion 3 (hereinafter referred to as a protrusion) extending in the radial direction of the holder member 2 and protruding from the inner and outer surfaces of the holder member 2 by a predetermined length. The protrusion 3 has an opening which is substantially the same in shape as that of a branch pipe opening (an end of a branch pipe 11 open to the main pipe 10) 11a (see Fig. 6).

The holder member 2 may be made of elastic plastic material, wood, or metal. The outer diameter D1 of the holder member 2 before the device 1 is introduced into the main pipe 10 for a lining operation, later described, is set larger than the inner diameter D of the main pipe 10 (D1>D), while the width B of the holder member 2 is set larger than the outer diameter dl of the cylinder portion 3 (B>d1). In addition, the circumferential length of the holder member 2 is set longer than one half of the circumference of the inner wall of the main pipe 10. While the protrusion 3 is made separately from the holder member 2 in this embodiment, it should be understood that they may be integrated with each other. The outer diameter dl of the protrusion 3 is slightly smaller than the diameter d of a branch pipe 11 (see Fig. 6), later described, (d1<d), by a margin for inserting the protrusion 3 into the branch pipe 11.

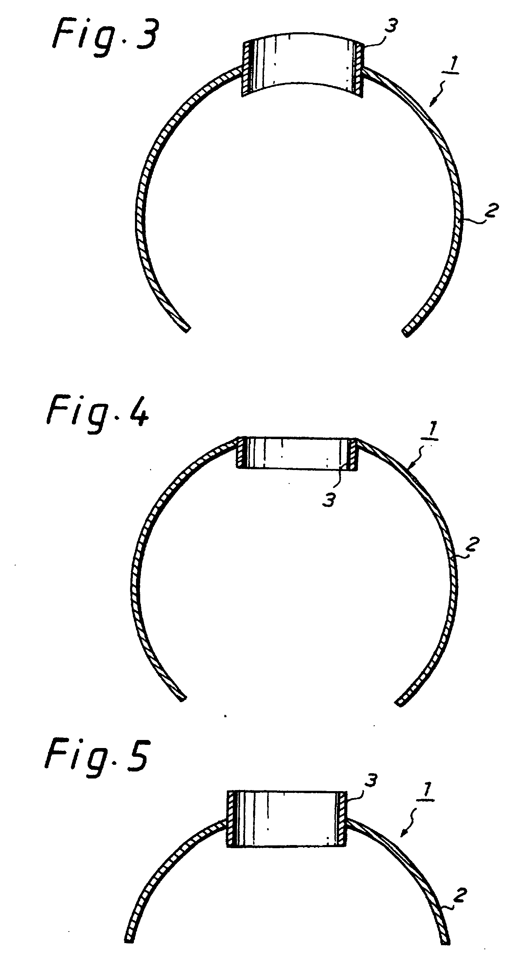

In another embodiment, the upper and lower end surfaces of the protrusion 3 may be curved as illustrated in Fig. 3. Also, in a further embodiment, the protrusion 3 may extend only toward the inner wall of the holder member 2, as illustrated in Fig. 4.

Further alternatively, the circumferential length of the holder member 2 of the device 1 may be set shorter than one half of the circumference of the inner wall of the main pipe 10, with the outer surface of the holder member 2 being impregnated or applied with a bonding agent.

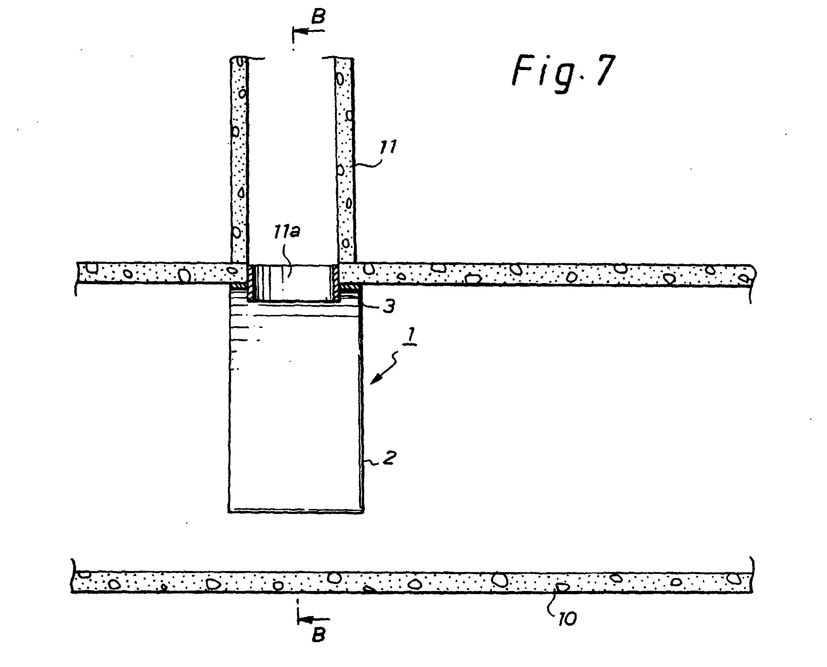

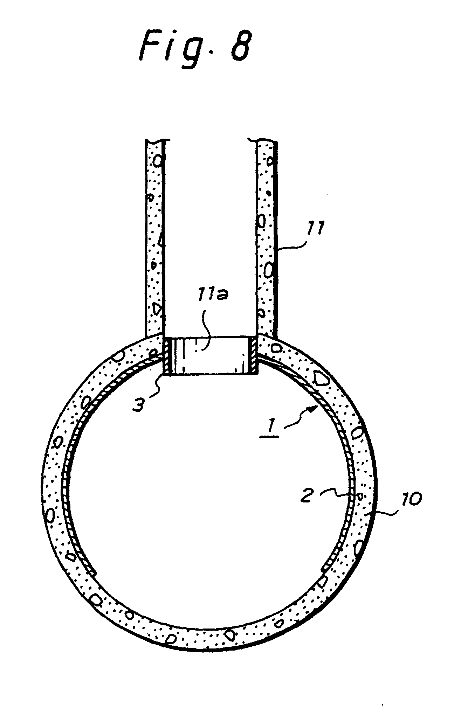

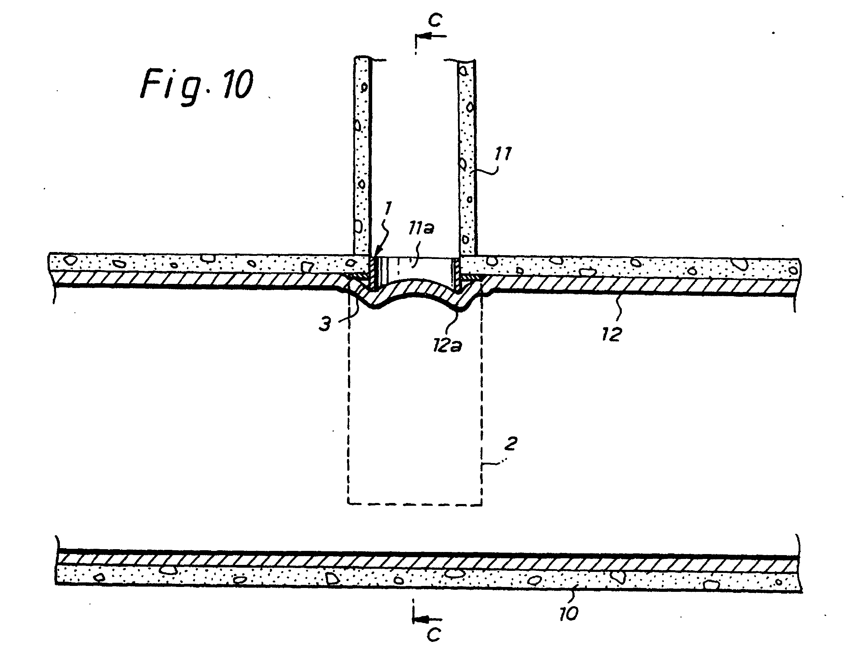

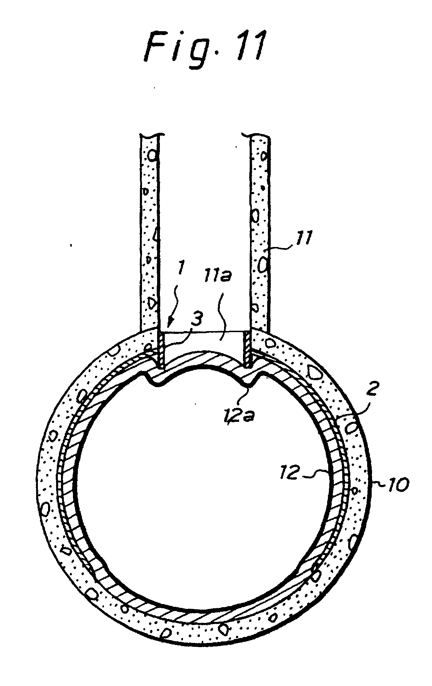

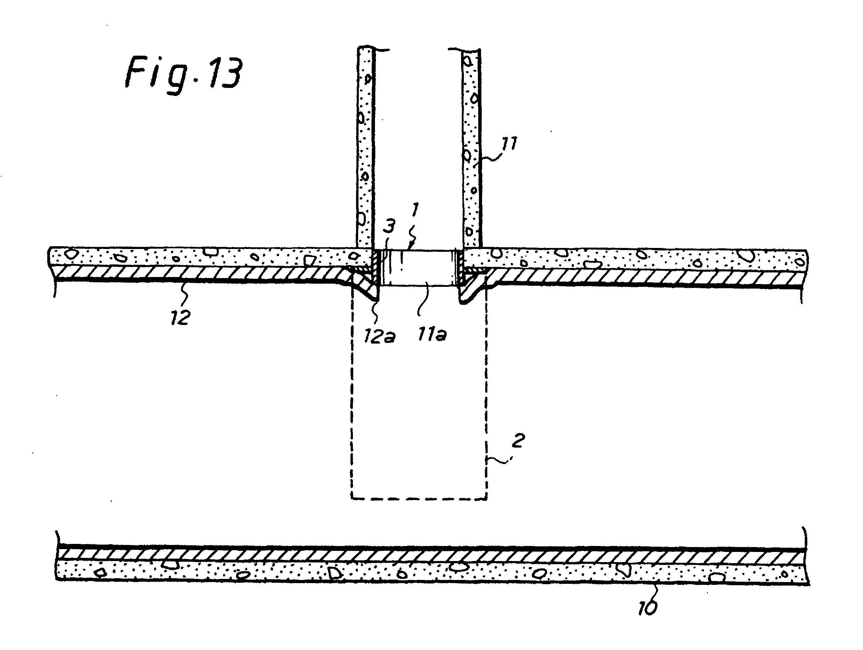

Next, a pipe lining method according to the present invention using the device illustrated in Figs. 1 and 2 will be described with reference to Figs. 6 through 13. Figs. 6 through 13 are cross-sectional views illustrating in order various steps of the pipe lining method according to an embodiment of the present invention, where Fig. 8 is a cross-sectional view taken along a line B-B in Fig. 7, and Fig. 11 is a cross-sectional view taken along a line C-C in Fig. 10.

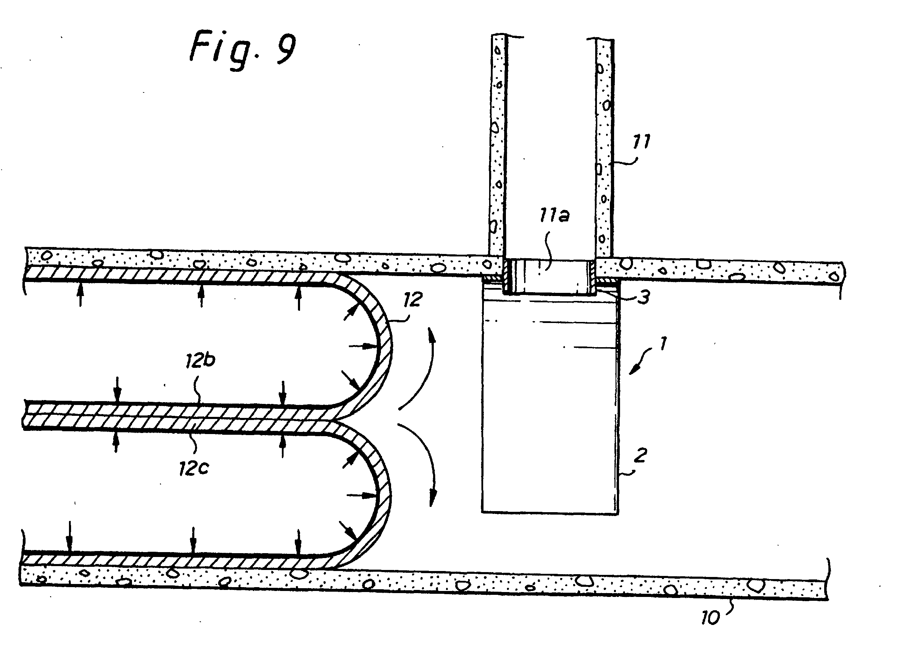

Referring first to Fig. 6, a main pipe 10 of a sewage pipe line, for example, includes a branch pipe 11 having a smaller diameter and confluent thereto as illustrated. In the pipe lining method of this embodiment, the aforementioned device 1 is introduced into the main pipe 10 and positioned such that the protrusion 3 is inserted into a branch pipe opening 11a. Subsequently, the main pipe 10 is lined with a main pipe liner bag 12 (see Fig. 9), and a portion of the main pipe liner bag 12 is cut along a mark 12a (see Figs. 10 and 11) formed by the protrusion 3 of the device 1 conformal to the branch pipe opening 11a and protruding under the main pipe liner bag 12.

More specifically, as illustrated in Fig. 6, an in-pipe working robot 13 is introduced into the main pipe 10. The device 1 is set on a head 13a at a leading end of the in-pipe working robot 13 in a diameter compressed state (in a state in which the diameter of the holder member 2 is compressed to a size smaller than the inner diameter D of the main pipe 10) with the protrusion 3 facing upward. The in-pipe working robot 13 is hydraulically driven with the head 13a being movable in a direction indicated by arrows a and rotatable in a direction indicated by arrows b. In addition, the in-pipe working robot 13 is provided with pull rope 14, 15 linked thereto and with a TV camera 16 for monitoring on the top surface thereof.

The in-pipe working robot 13 is moved by pulling the pull rope 14 or 15 while monitoring the inside of the main pipe 10 on the ground through the TV camera 16 installed on the in-pipe working robot 13. Then, the device 1 is positioned such that the protrusion 3 thereof matches the position of the branch pipe opening 11a. It should be noted that since the device 1 is set on the in-pipe working robot 13 in the diameter compressed state, the device 1 and the in-pipe working robot 13 can be freely moved without any obstacles.

After the device 1 is positioned as described above, the device 1 is released from the diameter compressed state. Since the holder member 2 of the device 1 is made of an elastic material as mentioned above, and the outer diameter D1 of the holder member 2 before the device 1 is introduced into the main pipe 10 is set larger the inner diameter D of the main pipe 10 (D1>D), the holder member 2 extends due to its elasticity when the device 1 is released from the diameter compressed state, as illustrated in Fig. 7 and 8, to closely contact the inner wall of the main pipe 10, whereby the device 1 is secured in position within the main pipe 10, and the protrusion 3 of the device 1 is inserted into the branch pipe opening 11a, with a portion of the protrusion 3 extending into the main pipe 10 as illustrated.

When the positioning of the device 1 in the main pipe 10 is completed, the main pipe 10 is lined in the next step.

More specifically, as illustrated in Fig. 9, a main pipe liner bag 12 is everted into the main pipe with a fluid pressure. The main pipe liner bag 12 comprises a tubular resin absorbent material 12c impregnated with an unhardened liquid hardenable resin. The tubular resin absorbent material 12c has its outer surface coated with a highly air-tight plastic film 12b. A material for the unwoven fabric constituting the tubular resin absorbent material 12c may be selected from polyester, polypropylene, nylon, acrylic fabric or the like. The unhardened liquid hardenable resin impregnated in the tubular resin absorbent material 12c may be a thermosetting resin such as unsaturated polyester resin, epoxy resin, vinyl ester resin, or the like. The plastic film 12b may be made in a single-layer or multi-layer seamless tube by an inflation method, and a material therefor may be selected from polyurethane, polyethylene, nylon, ethylene vinyl alcohol, admer, ionomer, vinyl chloride, and so on.

Then, as illustrated in Fig. 10, when the main pipe liner bag 12 has been completely everted into the main pipe 10 over the entire length of the main pipe 10, the main pipe liner bag 12 is heated by an arbitrary heating means to harden the thermosetting resin impregnated therein, with the main pipe liner bag 12 urged against the inner wall of the main pipe 10 with a fluid pressure (hardening pressure) applied inside the main pipe liner bag 12. This causes the inner wall of the main pipe 10 to be lined with the hardened main pipe liner bag 12, thus repairing the main pipe. In this event, a mark 12a conformal to the branch pipe opening 11a is protrusively formed on the main pipe liner bag 12 by the cylindrical (protrusion 3) of the device 1 extending to the main pipe 10.

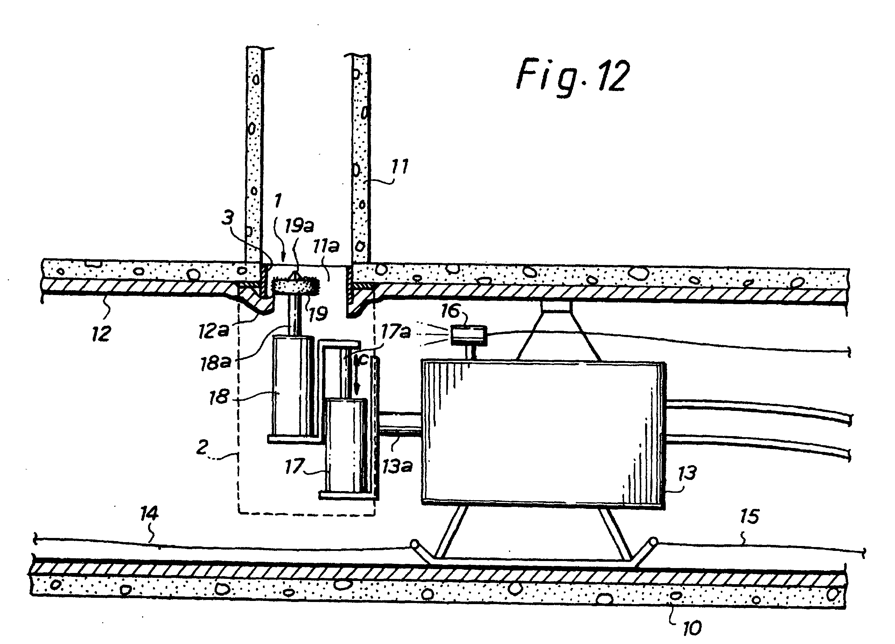

When the inner wall surface of the main pipe 10 is lined with the main pipe liner bag 12 as described above, the branch pipe opening 11a of the main pipe 10 is covered with the main pipe liner bag 12, so that a portion of the main pipe liner bag 12 covering the branch pipe opening 11a must be cut away to communicate the branch pipe 11 with the main pipe 10, as illustrated in Fig. 12.

More specifically, the in-pipe working robot 13 is introduced into the main pipe 10 for cutting the main pipe inner bag 12, as illustrated in Fig. 12. The in-pipe working robot 13 is provided with a hydraulic cylinder 17 mounted to the head 13a. The hydraulic cylinder 17 is provided with a hydraulic motor 18 supported by a rod 17a which is movable in the vertical direction as indicated by arrows c in the figure. A cutter 19 having an outer diameter smaller than the diameter of the branch pipe opening 11a is mounted on an output shaft of the hydraulic motor 18, the cutter 19 being formed with cutting blades on the upper and lower surfaces as well as on the outer peripheral surface. A reamer 19a is also mounted on a central portion of the upper surface of the cutter 19.

Then, the in-pipe working robot 13 is moved within the main pipe 10 by pulling the pull rope 14 or 15 and the cutter 19 is appropriately positioned, while monitoring the inside of the main pipe 10 through the TV camera 16 installed on the in-pipe working robot 13. Afterward, the hydraulic motor 18 is driven to rotate the cutter 19 while the hydraulic cylinder 17 is driven to move the hydraulic motor 18 and the cutter 19 upward, causing the cutter 19 to cut the portion of the main pipe liner bag 12 covering the branch pipe opening 11a. In this event, since the mark 12a is protrusively formed on the main pipe liner bag 12, conformal to the branch pipe opening 11a by the protrusion 3 of the device 1, as described above, the mark 12a can be easily found, so that the main pipe liner bag 12 can be exactly cut along the mark 12a.

In this embodiment, since the hardening pressure need not be increased as is the case of the prior art, the liquid thermosetting resin impregnated in the main pipe liner bag 12 will never ooze into the branch pipe 11 and harden. In addition, even if the cross-section of the branch pipe opening 11a is not circular or does not have the same diameter as the diameter of the branch pipe 11, the main pipe liner bag 12 can be exactly cut along the mark 12a conformal to the branch pipe opening 11a which is protrusively formed on the main pipe liner bag 12.

Since the periphery of the branch pipe opening 11a is covered and protected by the protrusion 3 of the device 1, the periphery of the branch pipe opening 11a will not be damaged by the cutter 19, thus preventing underground water or the like from intruding through a damaged portion into the main pipe 10.

When the portion of the main pipe liner bag 12 covering the branch pipe opening 11a is completely cut away by the cutter 19 as described above, the branch pipe 11 is open to the main pipe 10 so that both the pipes are in communication with each other, thus completing a series of pipe lining operation steps.

In the device 1 illustrated in Fig. 5, since the circumferential length of the holder member 2 is shorter than one half of the circumference of the inner wall of the main pipe 10, a holding force provided only by extending the holder member 2 within the main pipe 10 may not be sufficient. However, since the outer surface of the holder member 2 is impregnated or applied with a bonding agent, a bonding force of the bonding agent helps hold the device 1 (or the holder member 2) on the inner surface of the main pipe 10, thereby preventing the device 1 from dropping.

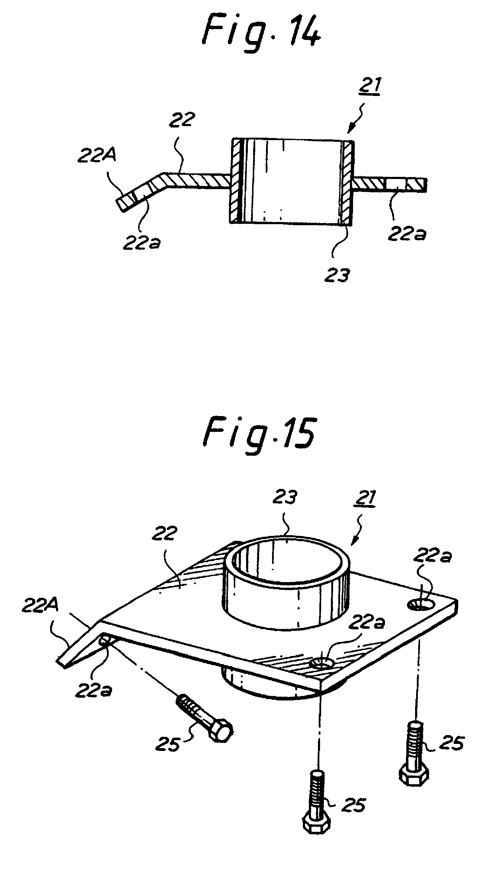

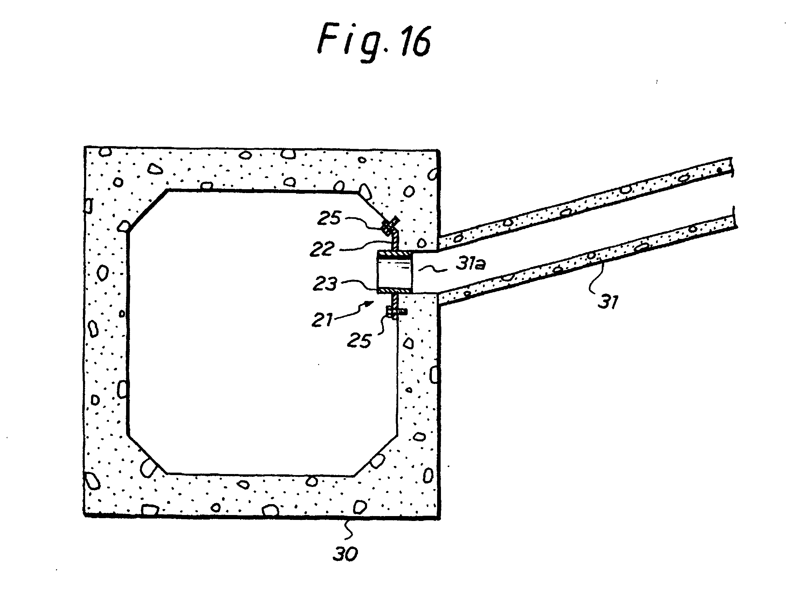

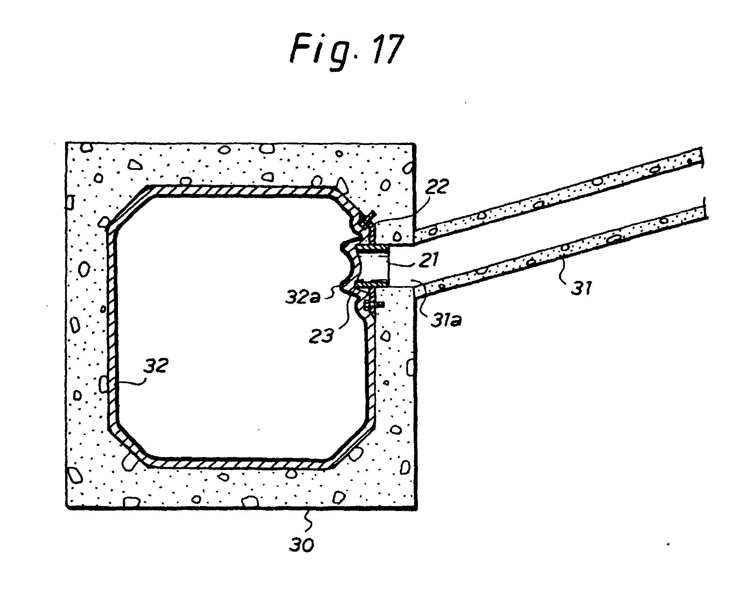

Next, a second embodiment of the present invention will be described with reference to Figs. 14 through 17. Fig. 14 is a cross-sectional view of a device for confirming the position of a branch pipe opening according to the second embodiment; Fig. 15 is a perspective view of the device for confirming the position of a branch pipe opening; and Figs. 16 and 17 are lateral cross-sectional views illustrating in order steps of a pipe lining method using the device for confirming the position of a branch pipe opening according to the second embodiment.

The second embodiment is particularly applicable to a main pipe which is large enough to allow a human to enter.

As illustrated in Figs. 14 and 15, a device 21 for confirming the position of a branch pipe opening (hereinafter simply referred to as the "device") according to the second embodiment comprises a flange 22 which abuts to the inner wall of a main pipe of a box culvert type (see Fig. 16) around the periphery of a branch pipe opening 31a, when the device 21 is set in position; and a protrusion 23 formed in a portion of the flange 22 to have an opening substantially conformal to the branch pipe opening 31a and to extend through the flange 22. The protrusion 23 protrudes from the inner and outer surface of the flange 22 by a predetermined length. The flange 22 is formed with four bolt bores 22a through four corner portions thereof for inserting anchor bolts 25 therethrough.

The device 21 may be made of a plastic material or metal, and a portion 22A of the flange 22 is bent along the shape of the inner wall of the main pipe 30, as can be seen in Fig. 16.

For lining the main pipe 30, an operator may enter the main pipe 30 and manually mount the device 21 on the inner wall of the main pipe 30 around the periphery of the branch pipe opening 31a as illustrated in Fig. 16. More specifically, the protrusion 23 of the device 21 is positioned at the branch pipe opening 31a, the flange 22 of the device 21 is brought into contact with the inner wall of the main pipe 30 around the periphery of the branch pipe opening 31a, and the device 21 is secured on the inner wall of the main pipe 30 by the anchor bolts 25 inserted through the bolt bores 22a formed through the flange 22. In Figs. 16 and 17, a branch pipe 31 of a smaller diameter is illustrated as being confluent to the main pipe 30.

When the device 21 is positioned and secured to the main pipe 30 as described above, the main pipe 30 is lined using a main pipe liner bag 32 in a manner similar to the first embodiment, wherein a mark 32a substantially conformal to the branch pipe opening 31a is protrusively formed on the main pipe liner bag 32 due to the protrusion 23 of the device 21 extending toward the main pipe 30.

It will therefore be appreciated that the mark 32a formed on the main pipe liner bag 32 can be easily found when cutting the portion of the main pipe liner bag 32 covering the branch pipe opening 31a, so that the main pipe liner bag 32 can be exactly cut along the mark 32a, as is the case of the first embodiment. In addition, the second embodiment allows an operator to enter the main pipe 30 to manually cut the main pipe liner bag.

As will be apparent from the foregoing description, according to the pipe lining method using the device for confirming the position of a branch pipe opening of the first embodiment, when the device for confirming the position of a branch pipe opening is set within a main pipe, the protrusion of the device is inserted into a branch pipe opening for positioning, and the main pipe is lined using a main pipe liner bag, the protrusion of the device for confirming the position of a branch pipe opening causes a mark substantially conformal to the branch pipe opening to be protrusively formed on the main pipe liner bag, so that the main pipe liner bag can be exactly cut along the mark. Since a hardening pressure need not be increased as before, it is possible to eliminate inconveniences such as oozing and hardening of a liquid hardenable resin impregnated in the main pipe liner bag. In addition, even if a branch pipe opening has a non-circular shape or a diameter different from that of the branch pipe itself, the main pipe liner bag can be exactly cut along a mark substantially conformal to the branch pipe opening, protrusively formed on the main pipe liner bag by the device for confirming the position of a branch pipe opening of the present invention.

Also, in the pipe lining method using the device for confirming the position of a branch pipe opening according to the second embodiment of the present invention, when a main pipe is lined using a main pipe liner bag after the device for confirming the position of a branch pipe opening is secured on the inner wall of a main pipe, a mark substantially conformal to the branch pipe opening is protrusively formed on the main pipe liner bag by the protrusion of the device for confirming the position of a branch pipe opening, so that the main pipe liner bag can be exactly cut along the mark.

While the present invention has been described in connection with its preferred embodiments, it is to be understood that various modifications will occur to those skilled in the art without departing from the scope of the invention.

## Claims

1. A device (1) for confirming the position of a branch pipe opening (11a), comprising:
a holder member (2) having a shape such that said holder member is in close contact with an inner wall of a main pipe (10) when said device (1) is placed in position; and
a protrusion (3) formed in a portion of said holder member (2), said protrusion having an opening substantially conformal to a branch pipe opening (11a), said protrusion extending beyond an inner surface or beyond the inner surface and an outer surface of said holder member.

2. A device as claimed in claim 1, **characterized in that** said holder member (2) is made of a plastic material, wood, or metal having elasticity, and said holder member has an outer diameter (D1) which is set larger than an inner diameter (D) of the main pipe (10) when said device (1) is introduced into the main pipe.

3. A device as claimed in claim 1 or 2, **characterized in that** a circumferential length of said holder member (2) is set longer than one half of the circumference of an inner wall of the main pipe (10).

4. A device as claimed in claim 1 or 2, **characterized in that** a circumferential length of said holder member (2) is set shorter than one half of the circumference of an inner wall of the main pipe (10), and an outer surface of said holder member is applied or impregnated with a bonding agent.

5. A device (21) for confirming the position of a branch pipe opening (31a) comprising:
a flange (22) shaped for abutment to an inner wall of a main pipe (30) around the periphery of a branch pipe opening (31a); and
a protrusion (23) formed in a portion of said flange (22), said protrusion having an opening substantially conformal to the branch pipe opening (31a), said protrusion extending beyond an inner wall or beyond the inner wall and an outer wall of said flange.

6. A pipe lining method for lining an inner wall of a main pipe (10) having a branch pipe (11) confluent thereto, comprising the steps of:
introducing a device (1) for confirming the position of a branch pipe opening into a main pipe (10), wherein said device for confirming the position of a branch pipe opening (11a) comprises a holder member (2) having a shape such that said holder member is in close contact with an inner wall of a main pipe (10) when said device is placed in position, and a protrusion (3) formed in a portion of said holder member, said protrusion having an opening substantially conformal to a branch pipe opening (11a), said protrusion extending beyond an inner surface or beyond the inner surface and an outer surface of said holder member;
positioning said protrusion (3) of said device (1) at a branch pipe opening (11a);
closely contacting the holder member (2) onto an inner wall of the main pipe (10) to insert the protrusion (3) into the branch pipe opening (11a) so that said device (1) is secured within the main pipe;
lining the main pipe (10) using a main pipe liner bag (12), said main pipe liner bag comprising a tubular resin absorbent material and an unhardened liquid hardenable resin impregnated in the tubular resin absorbent material; and
cutting said main pipe liner bag (12) along a mark (12a) substantially conformal to the branch pipe opening (11a), said mark being protrusively formed on said main pipe liner bag due to the protrusion (3) of said device (1) for confirming the position of a branch pipe opening.

7. A pipe lining method as claimed in claim 6, **characterized in that** said device (1) for confirming the position of a branch pipe opening (11a) is set on an in-pipe working robot (13) in a diameter compressed state, and released from the diameter compressed state after the protrusion (3) of said device is positioned at the branch pipe opening by the in-pipe working robot introduced in the main pipe (10), so that said device is secured at a predetermined position in the main pipe.

8. A pipe lining method as claimed in claim 6 or 7, **characterized in that** said main pipe liner bag (12) is cut by a cutter (19) arranged on said in-pipe working robot (13).

9. A pipe lining method as claimed in claim 6, 7, or 8, **characterized in that** the positioning of said device (1) for confirming the position of a branch pipe opening (11a) and the cutting of said main pipe liner bag (12) are performed while the inside of the main pipe (10) is being monitored on the ground through a TV camera (16) introduced into the main pipe.

10. A pipe lining method for lining an inner wall of a main pipe (30) having a branch pipe (31) confluent thereto, comprising the steps of:
introducing a device (21) for confirming the position of a branch pipe opening into a main pipe (30), wherein said device for confirming the position of a branch pipe opening (31a) comprises a flange (22) shaped for abutment to an inner wall of a main pipe around the periphery of a branch pipe opening (31a), and a protrusion (23) formed in a portion of said flange, said protrusion having an opening substantially conformal to the branch pipe opening, said protrusion extending beyond an inner wall or beyond the inner wall and an outer wall of said flange;
positioning the protrusion (23) of said device (21) at the branch pipe opening (31a);
placing the flange (22) of said device (21) in abutting relationship to the inner wall of the main pipe (30) around the periphery of the branch pipe opening (31a);
securing said device (21) on the inner wall of the main pipe (30) by anchor bolts (25) inserted through the flange (22);
lining the main pipe (30) using a main pipe liner bag (32), said main pipe liner bag comprising a tubular resin absorbent material and an unhardened liquid hardenable resin impregnated in the tubular resin absorbent material; and
cutting said main pipe liner bag (32) along a mark (32a) substantially conformal to the branch pipe opening (31a), said mark being protrusively formed on said main pipe liner bag due to the protrusion (23) of said device (21) for confirming the position of a branch pipe opening.

## Patentansprüche

1. Vorrichtung (1) zum Orten der Position einer Abzweigrohröffnung (11a), die aufweist:
ein Halteelement (2) mit einer derartigen Form, daß sich das Halteelement in engem Kontakt mit einer Innenwand eines Hauptrohres (10) befindet, wenn die Vorrichtung (1) in Position gebracht wird; und
einen Vorsprung (3), der in einem Abschnitt des Halteelementes (2) gebildet wird,
wobei der Vorsprung eine Öffnung aufweist, die im wesentlichen mit einer Abzweigrohröffnung (11a) übereinstimmt, wobei sich der Vorsprung über eine Innenfläche oder über die Innenfläche und eine Außenfläche des Haltelementes hinaus erstreckt.

2. Vorrichtung nach Anspruch 1, **dadurch gekennzeichnet, daß** das Halteelement (2) aus einem Kunststoffmaterial, Holz oder Metall mit einer Elastizität besteht, und daß das Halteelement einen Außendurchmesser (D1) aufweist, der größer eingestellt ist als der Innendurchmesser (D) des Hauptrohres (10), wenn die Vorrichtung (1) in das Hauptrohr eingeführt wird.

3. Vorrichtung nach Anspruch 1 oder 2, **dadurch gekennzeichnet, daß** eine Umfangslänge des Halteelementes (2) länger eingestellt ist als eine Hälfte des Umfanges einer Innenwand des Hauptrohres (10).

4. Vorrichtung nach Anspruch 1 oder 2, **dadurch gekennzeichnet, daß** eine Umfangslänge des Halteelementes (2) kürzer eingestellt wird als eine Hälfte des Umfanges einer Innenwand des Hauptrohres (10), und daß auf eine Außenfläche des Halteelementes ein Bindemittel aufgebracht oder diese damit imprägniert wird.

5. Vorrichtung (21) zum Orten der Position einer Abzweigrohröffnung (31a), die aufweist:
einen Flansch (22), der für ein Anstoßen an eine Innenwand eines Hauptrohres (30) um den Umfang einer Abzweigrohröffnung (31 a) herum ausgebildet ist; und
einen Vorsprung (23), der in einem Abschnitt des Flansches (22) gebildet wird, wobei der Vorsprung eine Öffnung aufweist, die im wesentlichen mit der Abzweigrohröffnung (31 a) übereinstimmt, wobei sich der Vorsprung über eine Innenwand oder über die Innenwand und eine Außenwand des Flansches hinaus erstreckt.

6. Rohrauskleidungsverfahren zum Auskleiden einer Innenwand eines Hauptrohres (10), das ein Abzweigrohr (11) aufweist, das sich damit vereint, das die folgenden Schritte aufweist:
Einführen einer Vorrichtung (1) zum Orten der Position einer Abzweigrohröffnung in ein Hauptrohr (10) hinein, wobei die Vorrichtung zum Orten der Position der Abzweigrohröffnung (11a) aufweist: ein Halteelement (2), das eine derartige Form aufweist, daß das Halteelement in engem Kontakt mit einer Innenwand eines Hauptrohres (10) ist, wenn die Vorrichtung in Position gebracht wird; und einen Vorsprung (3), der in einem Abschnitt des Halteelementes gebildet wird, wobei der Vorsprung eine Öffnung aufweist, die im wesentlichen mit einer Abzweigrohröffnung (11a) übereinstimmt, wobei sich der Vorsprung über eine Innenfläche oder über die Innenfläche und eine Außenfläche des Halteelementes hinaus erstreckt;
Positionieren des Vorsprunges (3) der Vorrichtung (1) in einer Abzweigrohröffnung (11a);
enges Kontaktieren des Halteelementes (2) auf einer Innenwand des Hauptrohres (10), um den Vorsprung (3) in die Abzweigrohröffnung (11a) so einzusetzen, daß die Vorrichtung (1) innerhalb des Hauptrohres gesichert wird;
Auskleiden des Hauptrohres (10) bei Verwendung eines Hauptrohrauskleidungsschlauches (12), wobei der Hauptrohrauskleidungsschlauch ein schlauchartiges harzaufnehmendes Material und ein nicht ausgehärtetes flüssiges härtbares Harz aufweist, das im schlauchartigen harzaufilehmenden Material imprägniert ist; und
Schneiden des Hauptrohrauskleidungsschlauches (12) längs einer Markierung (12a), die im wesentlichen mit der Abzweigrohröffnung (11a) übereinstimmt, wobei die Markierung vorspringend auf dem Hauptrohrauskleidungsschlauch infolge des Vorsprunges (3) der Vorrichtung (1) zum Orten der Position einer Abzweigrohröffnung gebildet wird.

7. Rohrauskleidungsverfahren nach Anspruch 6, **dadurch gekennzeichnet, daß** die Vorrichtung (1) zum Orten der Position einer Abzweigrohröffnung (11a) in einem im Rohr arbeitenden Roboter (13) in einem Zustand des zusammengedrückten Durchmessers eingesetzt wird, und daß sie aus dem Zustand des zusammengedrückten Durchmessers freigegeben wird, nachdem der Vorsprung (3) der Vorrichtung in der Abzweigrohröffnung durch den im Rohr arbeitenden Roboter, der in das Hauptrohr (10) eingeführt wird, positioniert ist, so daß die Vorrichtung in einer vorgegebenen Position im Hauptrohr gesichert wird.

8. Rohrauskleidungsverfahren nach Anspruch 6 oder 7, **dadurch gekennzeichnet, daß** der Hauptrohrauskleidungsschlauch (12) durch eine Schneidvorrichtung (19) aufgeschnitten wird, die in dem im Rohr arbeitenden Roboter (13) angeordnet ist.

9. Rohrauskleidungsverfahren nach Anspruch 6, 7 oder 8, **dadurch gekennzeichnet, daß** das Positionieren der Vorrichtung (1) zum Orten der Position einer Abzweigrohröffnung (11a) und das Schneiden des Hauptrohrauskleidungsschlauches (12) durchgeführt werden, während das Innere des Hauptrohres (10) auf der Erdoberfläche mittels einer Fernsehkamera (16) überwacht wird, die in das Hauptrohr eingeführt wird.

10. Rohrauskleidungsverfahren zum Auskleiden einer Innenwand eines Hauptrohres (30), das ein Abzweigrohr (31) aufweist, das sich damit vereint, das die folgenden Schritte aufweist:
Einführen einer Vorrichtung (21) zum Orten der Position einer Abzweigrohröffnung in ein Hauptrohr (30) hinein, wobei die Vorrichtung zum Orten der Position der Abzweigrohröffnung (31 a) aufweist: einen Flansch (22), der für ein Anstoßen an eine Innenwand eines Hauptrohres um den Umfang einer Abzweigrohröffnung (31 a) herum ausgebildet ist; und einen Vorsprung (23), der in einem Abschnitt des Flansches gebildet wird, wobei der Vorsprung eine Öffnung aufweist, die im wesentlichen mit einer Abzweigrohröffnung übereinstimmt, wobei sich der Vorsprung über eine Innenwand oder über die Innenwand und eine Außenwand des Flansches hinaus erstreckt;
Positionieren des Vorsprunges (23) der Vorrichtung (21) in einer Abzweigrohröffnung (31a);
Anordnen des Flansches (22) der Vorrichtung (21) in einer anstoßenden Beziehung zur Innenwand des Hauptrohres (30) um den Umfang der Abzweigrohröffnung (31a) herum;
Sichern der Vorrichtung (21) an der Innenwand des Hauptrohres (30) mittels Verankerungsschrauben (25), die durch den Flansch (22) eingesetzt werden;
Auskleiden des Hauptrohres (30) bei Verwendung eines Hauptrohrauskleidungsschlauches (32), wobei der Hauptrohrauskleidungsschlauch ein schlauchartiges harzaufnehmendes Material und ein nicht ausgehärtetes flüssiges härtbares Harz aufweist, das im schlauchartigen harzaufnehmenden Material imprägniert ist; und
Schneiden des Hauptrohrauskleidungsschlauches (32) längs einer Markierung (32a), die im wesentlichen mit der Abzweigrohröffnung (31a) übereinstimmt, wobei die Markierung vorspringend auf dem Hauptrohrauskleidungsschlauch infolge des Vorsprunges (23) der Vorrichtung (21) zum Orten der Position einer Abzweigrohröffnung gebildet wird.

## Revendications

1. Dispositif pour confirmer la position d'une ouverture d'un tuyau de dérivation (11a), comprenant:
un élément de retenue (2) ayant une forme telle que l'élément de retenue est en contact étroit avec une paroi interne du tuyau principal (10) lorsque ledit dispositif (1) est mis en position ; et
une saillie (3) formée dans une partie de l'élément de retenue (2), la saillie comportant une ouverture pratiquement conforme à l'ouverture d'un tuyau de dérivation (11a) et s'étendant au-delà d'une surface interne ou au-delà de la surface interne et d'une surface externe de l'élément de retenue.

2. Dispositif selon la revendication 1, **caractérisé en ce que** ledit élément de retenue (2) est composé de plastique, de bois ou de métal présentant une certaine élasticité, ledit élément de retenue ayant un diamètre extérieur (D1) plus grand qu'un diamètre intérieur (D) du tuyau principal (10) lorsque ledit dispositif (1) est inséré dans le tuyau principal.

3. Dispositif selon les revendications 1 ou 2, **caractérisé en ce qu'**une longueur circonférentielle dudit élément de retenue (2) est plus longue qu'une moitié de la circonférence d'une paroi interne du tuyau principal (10).

4. Dispositif selon les revendications 1 ou 2, **caractérisé en ce qu'**une longueur circonférentielle dudit élément de retenue (2) est plus courte qu'une moitié de la circonférence d'une paroi interne du tuyau principal (10), une surface externe dudit élément de retenue étant imprégnée d'un agent de liaison, celui-ci pouvant aussi y être appliqué.

5. Dispositif (21) pour confirmer la position d'une ouverture d'un tuyau de dérivation (31a) comprenant :
une bride (22) formée de sorte à buter contre une paroi interne d'un tuyau principal (30) autour de la périphérie d'une ouverture du tuyau de dérivation (3 la) ; et
une saillie (23) formée dans une partie de la bride (22), la saillie comportant une ouverture pratiquement conforme à l'ouverture du tuyau de dérivation (3 la) et s'étendant au-delà d'une paroi interne ou au-delà de la paroi interne et d'une paroi externe de la bride.

6. Procédé de revêtement d'un tuyau pour revêtir la paroi interne d'un tuyau principal (10) comportant un tuyau de dérivation confluent (11), comprenant les étapes ci-dessous :
introduction d'un dispositif (1) pour confirmer la position d'une ouverture d'un tuyau de dérivation dans un tuyau principal (10), le dispositif destiné à confirmer la position d'une ouverture d'un tuyau de dérivation (11a) comprenant un élément de retenue (2) ayant une forme telle que l'élément de retenue est en contact étroit avec une paroi interne du tuyau principal (10) lorsque le dispositif est mis en position, et une saillie (3) formée dans une partie de l'élément de retenue, la saillie comportant une ouverture pratiquement conforme à l'ouverture d'un tuyau de dérivation (11a) et s'étendant au-delà d'une surface interne ou au-delà de la surface interne et d'une surface externe de l'élément de retenue ;
positionnement de la saillie (3) du dispositif (1) au niveau d'une ouverture du tuyau de dérivation (11a);
mise en contact étroit de l'élément de retenue (2) avec une paroi interne du tuyau principal (10) pour insérer la saillie (3) dans l'ouverture du tuyau de dérivation (11a), de sorte que le dispositif (1) est fixé dans le tuyau principal ;
revêtement du tuyau principal (10) par l'intermédiaire d'un revêtement en forme de sac du tuyau principal (12), ledit revêtement en forme de sac du tuyau principal comprenant un matériau tubulaire à absorption de résine et une résine liquide non durcie durcissable imprégnée dans le matériau tubulaire à absorption de résine ; et
découpage dudit revêtement en forme de sac du tuyau principal (12) le long d'une marque (12a) pratiquement conforme à l'ouverture du tuyau de dérivation (11a), ladite marque étant formée de manière protubérante sur le revêtement en forme de sac du tuyau principal, par suite de la présence de la saillie (3) dudit dispositif (1) destiné à confirmer la position d'une ouverture d'un tuyau de dérivation.

7. Procédé de revêtement d'un tuyau selon la revendication 6, **caractérisé en ce que** ledit dispositif (1) destiné à confirmer la position d'une ouverture du tuyau de dérivation (11a) est placé sur un robot de travail interne au tuyau (13) dans un état à diamètre comprimé, et dégagé de l'état à diamètre comprimé après le positionnement de la saillie (3) dudit dispositif au niveau de l'ouverture du tuyau de dérivation par le robot de travail interne au tuyau introduit dans le tuyau principal (10), de sorte que ledit dispositif est fixé au niveau d'une position prédéterminée dans le tuyau principal.

8. Procédé de revêtement d'un tuyau selon les revendications 6 ou 7, **caractérisé en ce que** ledit revêtement en forme de sac du tuyau principal (12) est découpé par un dispositif de coupe (19) agencé sur ledit robot de travail interne au tuyau (13).

9. Procédé de revêtement d'un tuyau selon les revendications 6, 7 ou 8, **caractérisé en ce que** le positionnement dudit dispositif (1) destiné à confirmer la position d'une ouverture du tuyau de dérivation (1 la) et le découpage dudit revêtement en forme de sac du tuyau principal (12) sont exécutés pendant que l'intérieur du tuyau principal (10) est surveillé sur le sol par une caméra de télévision (16) introduite dans le tuyau principal.

10. Procédé de revêtement d'un tuyau pour revêtir la paroi interne d'un tuyau principal (30) comportant un tuyau de dérivation confluent (31), comprenant les étapes ci-dessous :
introduction d'un dispositif (21) pour confirmer la position d'une ouverture d'un tuyau de dérivation dans un tuyau principal (30), le dispositif pour confirmer la position d'une ouverture d'un tuyau de dérivation (3 la) comprenant une bride (22) destinée à buter contre une paroi interne du tuyau principal autour de la périphérie de l'ouverture du tuyau de dérivation (31a), et une saillie (23) formée dans une partie de la bride, la saillie comportant une ouverture pratiquement conforme à l'ouverture du tuyau de dérivation, ladite saillie s'étendant au-delà d'une paroi interne ou au-delà de la surface interne et d'une surface externe de ladite bride ;
positionnement de la saillie (23) dudit dispositif (21) au niveau de l'ouverture du tuyau de dérivation (31a);
positionnement de la bride (22) dudit dispositif (21) de sorte qu'elle bute contre la paroi interne du tuyau principal (30) autour de la périphérie de l'ouverture du tuyau de dérivation (3 la);
fixation dudit dispositif (21) sur la paroi interne du tuyau principal (30) par des boulons d'ancrage (25) insérés à travers la bride (22) ;
revêtement du tuyau principal (30) par l'intermédiaire d'un revêtement en forme de sac du tuyau principal (32), le revêtement en forme de sac du tuyau principal comprenant un matériau tubulaire à absorption de résine et une résine liquide non durcie durcissable imprégnée dans le matériau tubulaire à absorption de résine ; et
découpage dudit revêtement en forme de sac du tuyau principal (32) le long d'une marque (32a) pratiquement conforme à l'ouverture du tuyau de dérivation (3 la), ladite marque étant formée de manière protubérante sur ledit revêtement en forme de sac du tuyau principal, par suite de la présence de la saillie (23) dudit dispositif (21) destiné à confirmer la position d'une ouverture d'un tuyau de dérivation.
